# EUROPÄISCHE PATENTSCHRIFT

(11) **EP 2 117 752 B1**
(45) Veröffentlichungstag und Bekanntmachung des Hinweises auf die Patenterteilung: **08.02.2012**
(21) Anmeldenummer: 08715714.5
(22) Anmeldetag: 08.02.2008
(51) Int. Cl.: B23B 51/02, B28D 1/14

(54) **GESTEINSBOHRER**
ROCK DRILL
DISPOSITIF DE FORAGE DE ROCHE

(30) Priorität: 08.02.2007 DE 202007002120 U
(43) Veröffentlichungstag der Anmeldung: 18.11.2009
(73) Patentinhaber: Illinois Tool Works Inc., Glenview, IL 60026-1215 (US)
(72) Erfinder: KERSTEN, Heinrich, 27283 Verden (DE)
(74) Vertreter: Gottschald, Jan
(86) Internationale Anmeldenummer: PCT/EP2008/000967
(87) Internationale Veröffentlichungsnummer: WO 2008/095716

(56) Entgegenhaltungen:
- EP-A- 1 125 663
- EP-A- 1 273 372
- WO-A-2005/063427
- DE-A1- 3 730 377
- DE-A1- 3 930 225
- GB-A- 2 201 910

## Beschreibung

Die Erfindung betrifft einen Gesteinsbohrer, insbesondere für den Einsatz in Verbindung mit einer Hammerbohrvorrichtung mit den Merkmalen des Oberbegriffs von Anspruch 1.

Der in Rede stehende Gesteinsbohrer eignet sich für das Bohren in Beton oder Stahlbeton, aber auch in sonstigem Mauerwerk, Fels o. dgl. Besonders hohe Anforderungen an den Gesteinsbohrer ergeben sich beim Bohren von metallisch armiertem Werkstoff. Dabei ist wegen der Schneidengeometrie des Gesteinsbohrers ein "geregeltes" Zerspanen der Armierung, wie es bei Metallbohrern bekannt ist, nicht möglich.

Vielmehr muß hier versucht werden, mit geeigneter Bohrerdrehzahl und möglichst hohem, an der Kontaktfläche herrschenden Anpreßdruck ein Durchtrennen der Armierung zu erreichen. Es handelt sich also um eine Mischung zwischen Zerspanung und plastischer Verformung. Dies ist mit einer hohen mechanischen Belastung des Gesteinsbohrers verbunden.

Wesentliche Kriterien für die Gestaltung von Gesteinsbohrern der in Rede stehenden Art sind die einfache Zentrierung, der erzielbare Bohrfortschritt pro Zeiteinheit, die hohe Einsatzzeit und nicht zuletzt der geringe Verschleiß.

Ein bekannter Gesteinsbohrer (DE 199 44 406 C2) ist mit einem Bohrkopf ausgestattet, an dem zwei Schneiden angeordnet sind. Die Schneiden sind bezogen auf die Bohrerlängsachse im wesentlichen radial ausgerichtet, verlaufen also von der Bohrerlängsachse ausgehend nach außen. Die Schneiden sind jeweils mit einer Schneidkante ausgestattet, die durch eine vorlaufend angeordnete Spanfläche und eine nachlaufend angeordnete Freifläche gebildet ist. Die Schneidkanten weisen einen geraden Verlauf auf.

Ein weiterer bekannter Gesteinsbohrer (EP 1 125 663 A2) ist mit zwei Hauptschneiden und zwei Nebenschneiden ausgestattet, wobei die Schneiden jeweils von oben gesehen bezogen auf die Bohrerlängsachse ebenfalls im Wesentlichen radial ausgerichtet sind. Der Oberbegriff von Anspruch 1 basirt auf diesem Dokument.

Bekannt ist es schließlich, die Schneidkanten der Schneiden eines Gesteinsbohrers mit gerade verlaufenden Ausnehmungen auszustatten (GB 2201910 A).

Der Lehre liegt das Problem zugrunde, den bekannten Gesteinsbohrer derart auszugestalten und weiterzubilden, daß der erzielbare Bohrfortschritt weiter gesteigert wird.

Das obige Problem wird bei einem Gesteinsbohrer gemäß dem Oberbegriff von Anspruch 1 durch die Merkmale des kennzeichnenden Teils von Anspruch 1 gelöst.

Bei einer Beaufschlagung des Bohrers mit einer axialen Anpreßkraft wird diese Anpreßkraft über eine Kontaktfläche, im wesentlichen also über die Schneidkanten, auf den zu bohrenden Werkstoff übertragen. Der Verlauf des resultierenden an der Kontaktfläche herrschenden Anpreßdrucks hängt in erster Linie von der Geometrie der Schneidkanten ab.

Der an der Kontaktfläche herrschende Anpreßdruck ist ein wesentlicher Einflußfaktor für den Bohrfortschritt pro Zeiteinheit. Dies gilt insbesondere für das Bohren von armiertem Werkstoff, wie weiter oben erläutert wurde.

Mittels im wesentlichen konvexer Ausformungen in der Schneidkante kann ein optimaler Verlauf des Anpreßdrucks über die Kontaktfläche erzielt werden kann. Dabei ist es vorzugsweise vorgesehen, daß an mindestens einer Schneide die Freifläche mindestens eine im wesentlichen konvexe Ausformung - Freiflächenhügel - aufweist, die zusammen mit der Spanfläche der Schneide eine im wesentlichen konvexe Ausformung in der Schneidkante - Sehneidkantenhügel - bildet.

Der Begriff "im wesentlichen konvex" ist vorliegend besonders weit zu verstehen. Darunter fallen alle Ausformungen, die in irgendeiner Weise nach außen vorstehen, also gewissermaßen hügelförmig ausgebildet sind. In diesem Sinne ist eine konvexe Ausformung nicht notwendigerweise rundlich, sondern kann sich auch aus geraden Abschnitten zusammensetzen.

Besonders gute Ergebnisse haben sich allerdings dadurch ergeben, daß der resultierende Schneidkantenhügel im wesentlichen bogenförmig ausgestaltet ist (Anspruch 4).

Die folgenden Ausführungen betreffen größtenteils nur eine Schneide, nur eine Schneidkante, nur einen Freiflächenhügel etc.. Dies ist nicht beschränkend zu verstehen. Vielmehr ist stets zu berücksichtigen, daß mehrere solcher Schneiden vorgesehen sein können, die jeweils mit mehreren Freiflächenhügeln etc. ausgestattet sein könnten.

Bevorzugte Ausgestaltungen des Freiflächenhügels sind Gegenstand der Ansprüche 5 bis 8. Bei der bevorzugten Ausgestaltung gemäß Anspruch 6 hat sich eine besonders gute Bohrwirkung des Gesteinsbohrers gezeigt. Bei der bevorzugten Ausgestaltung gemäß Anspruch 7 läßt sich die spezifische Zerspanungskraft an einem Schneidkantenhügel (und der an einem Schneidkantenhügel herrschende Anpreßdruck) durch eine geeignete Parametrierung des Abflachungsbereichs einfach einstellen.

Bei der bevorzugten Ausgestaltung gemäß Anspruch 10 sind die Freiflächenhügel und die Freiflächentäler unterschiedlicher Schneiden zueinander versetzt angeordnet. Diese Asymmetrie hat insbesondere im Hammerbetrieb bei inhomogenen Werkstoffen Vorteile, da eine bestimmte Bearbeitungsstelle im Werkstück so mit zueinander komplementär ausgeformten Schneidkanten bearbeitet wird.

Nach der vorschlagsgemäßen Lehre ist es so, daß von oben gesehen die Schneidkanten der Schneiden von innen nach außen entlang eines Bogens mit einer Krümmungsrichtung verlaufen, die der Drehrichtung des Gesteinsbohrers entgegengesetzt ist.

Damit wird erreicht, daß die Schneidkanten verglichen mit einer idealen radialen Ausrichtung nacheilend ausgelegt sind. Damit kommt es in einem gewissen Rahmen zu einem seitlichen Abgleiten der Schneidkante auf dem Werkstoff, insbesondere auf einer zu trennenden Armierung, was sich günstig auf die Bohrleistung auswirkt.

Vorschlagsgemäß ist es ferner vorgesehen, dass die Freifläche mindestens eine im Wesentlichen konkave Ausformung - Freiflächental - aufweist, das zusammen mit der Spanfläche eine im Wesentlichen konkave Ausformung der Schneidkante - Schneidkantental - bildet und dass das Freiflächental länglich ausgestaltet ist und entlang einer gebogenen Bahn verläuft.

Im folgenden wird die Erfindung anhand einer Ausführungsbeispiele eines erfindungsgemäßen Gesteinsbohrers darstellenden Zeichnung näher erläutert. In der Zeichnung zeigt
- Fig. 1: ein Gesteinsbohrer in einer Seitenansicht (technischer Hintergrund),
- Fig. 2: die Schneidplatte des Bohrkopfs des Gesteinsbohrers gemäß Fig. 1; a): in einer perspektivischen Ansicht, b): in einer Seitenansicht, c): in einer Schnittansicht gemäß der Schnittlinie IIc-IIc, d): in einer Ansicht von oben,
- Fig. 3: die Schneidplatte des Bohrkopfs eines weiteren Gesteinsbohrers in einer Seitenansicht (technischer Hintergrund),
- Fig. 4: den Bohrkopf eines erfindungsgemäßen Gesteinsbohrers a) in einer perspektivischen Ansicht, b) in einer Ansicht von oben,
- Fig. 5: den Bohrkopf eines weiteren erfindungsgemäßen Gesteinsbohrers a) in einer perspektivischen Ansicht und b) in einer Ansicht von oben und
- Fig. 6: den Bohrkopf eines weiteren Gesteinsbohrers in einer Ansicht von oben.

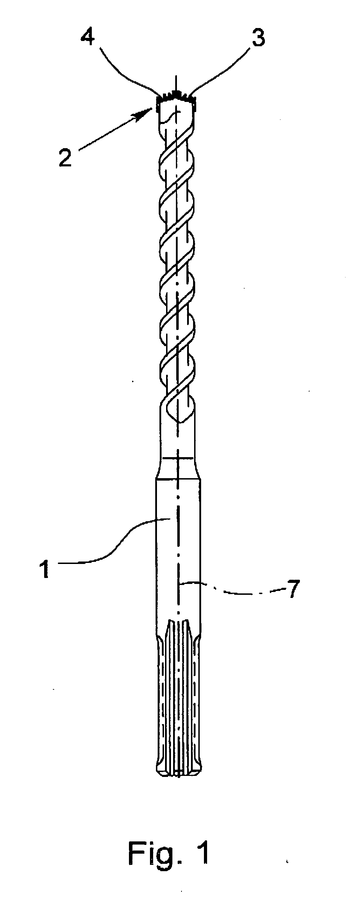

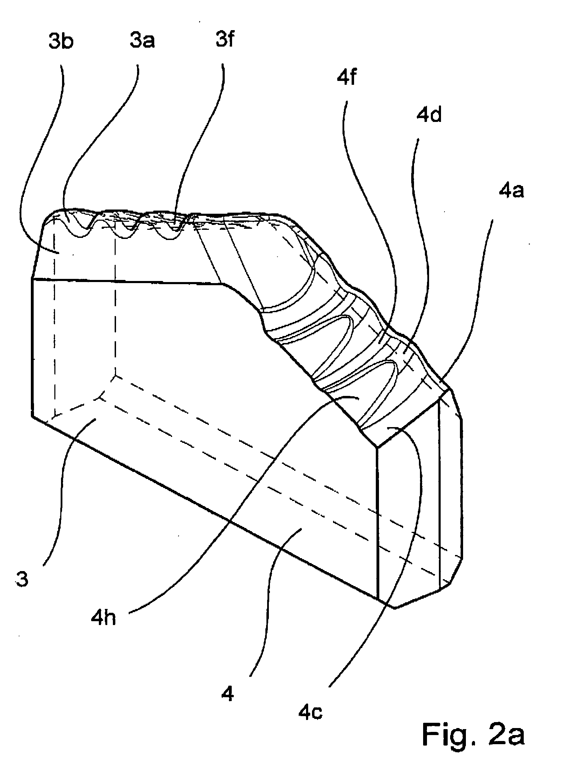

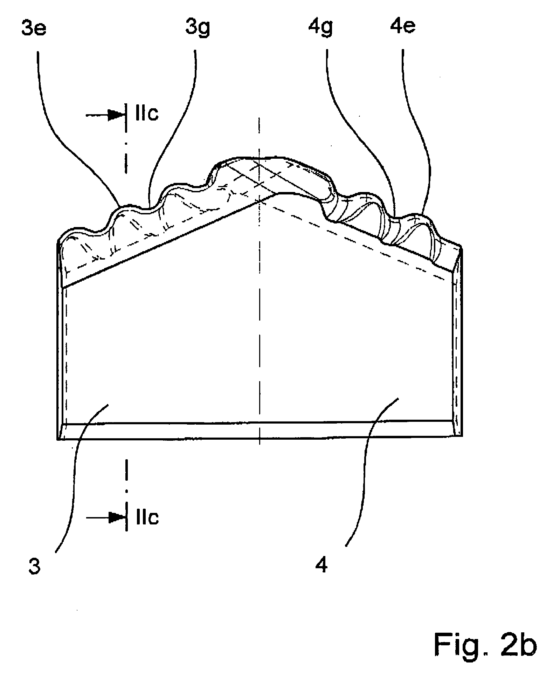

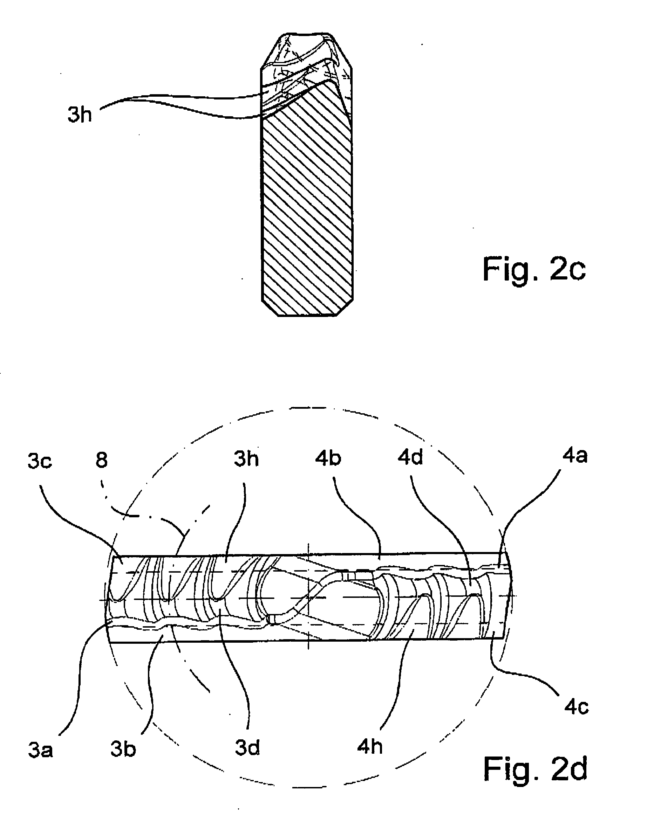

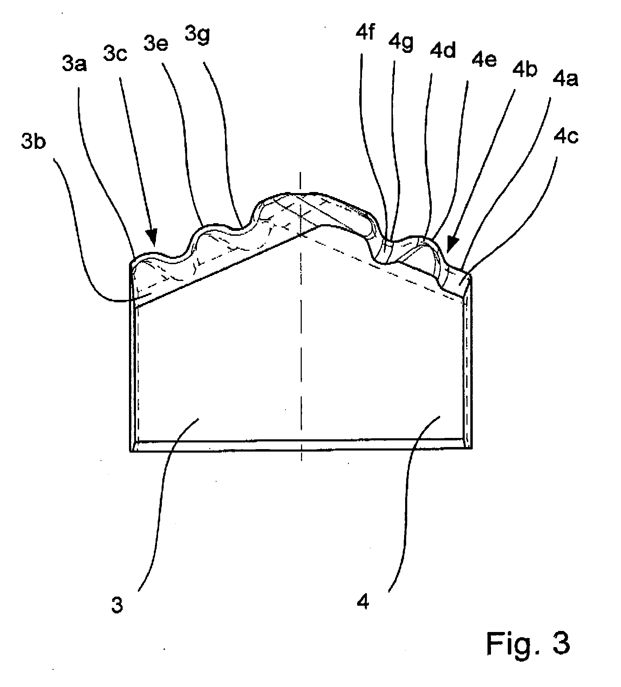

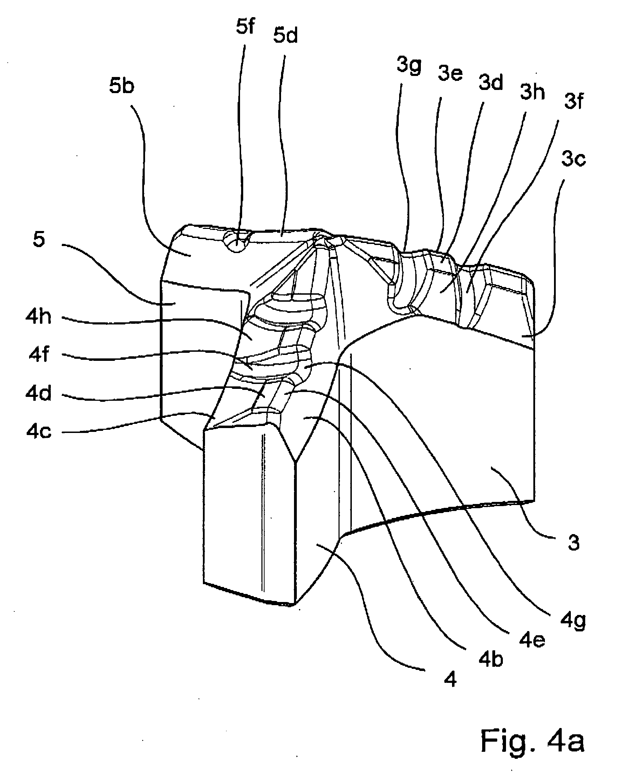

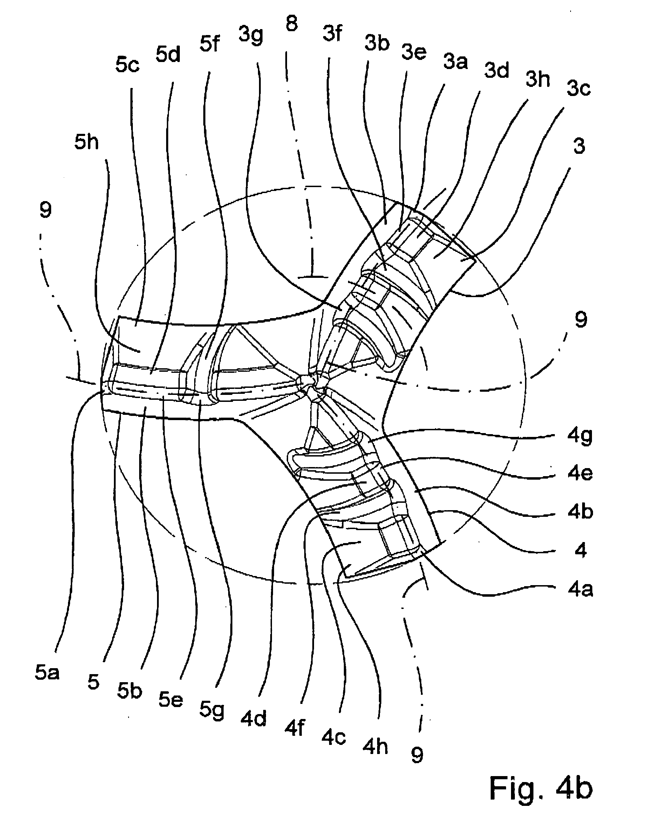

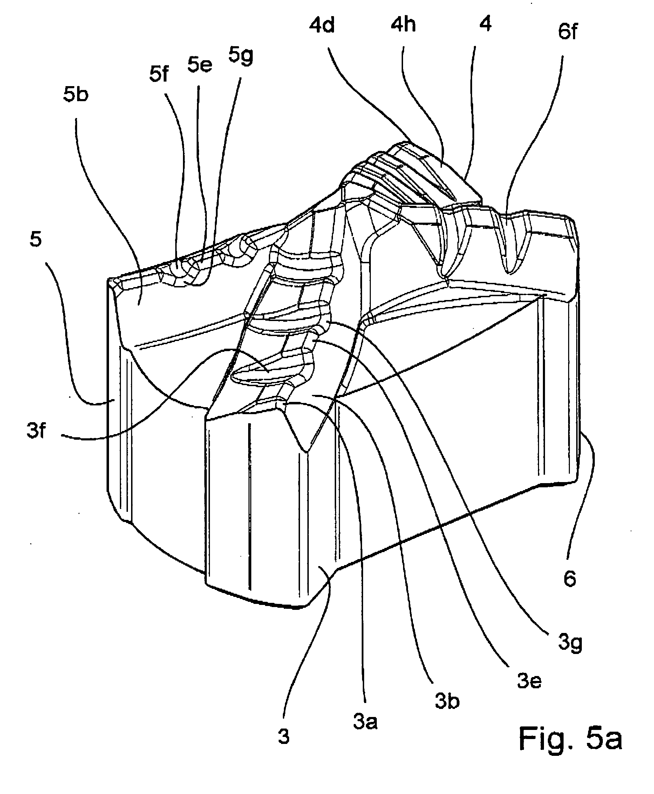

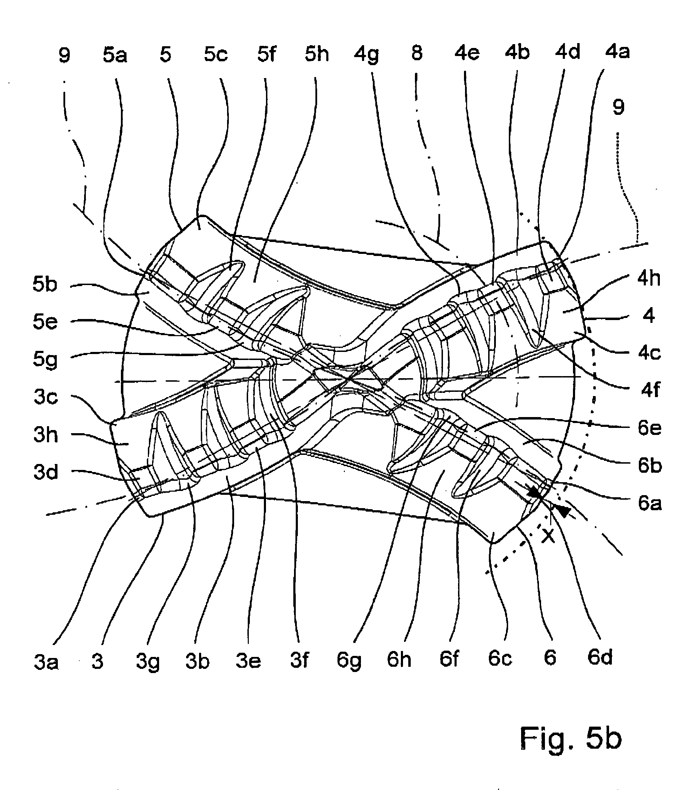

Die in der Zeichnung dargestellten, Gesteinsbohrer weisen alle einen Schaft 1 (Fig. 1) und einen am Schaft 1 ausgebildeten Bohrkopf 2 auf. Der Bohrkopf 2 kann, wie in Fig. 1 dargestellt, mit einer Schneidplatte ausgestattet sein. Solche Schneidplatten sind in den Fig. 2 und 3 dargestellt. Der Bohrkopf 2 kann aber auch einstückig ausgestaltet sein, wie in den Fig. 4 und 5 dargestellt. Unabhängig davon, ob der Bohrkopf 2 mit oder ohne Schneidplatte ausgestaltet ist, sind am Bohrkopf 2 mindestens zwei Schneiden 3-6 angeordnet. Die Schneiden 3-6 sind von oben gesehen bezogen auf die Bohrerlängsachse 7 im wesentlichen radial ausgerichtet. Damit ist lediglich gemeint, daß die Schneiden 3-6 von oben gesehen von der Bohrerlängsachse 7 aus gesehen nach außen verlaufen. Eine exakte radiale Ausrichtung ist damit also ausdrücklich nicht gemeint.

Bei allen dargestellten Ausführungsbeispielen ist es so, daß die Schneiden 3-6 jeweils eine Schneidkante 3a-6a aufweisen, die durch eine vorlaufend angeordnete Spanfläche 3b-6b und eine nachlaufend angeordnete Freifläche 3c-6c gebildet ist.

An mindestens einer Schneide 3-6 weist die Freifläche 3c-6c mindestens eine im wesentlichen konvexe Ausformung 3d-6d auf, die im folgenden als "Freiflächenhügel" bezeichnet wird. Ein solcher Freiflächenhügel 3d-6d bildet zusammen mit der Spanfläche 3b-6b der Schneide 3-6 eine im wesentlichen konvexe Ausformung 3e-6e in der Schneidkante 3a-6a der Schneide 3-6, die im folgenden als "Schneidkantenhügel" bezeichnet wird.

Bei der in Fig. 2 dargestellten Ausgestaltung weist die Schneide 3 insgesamt drei Schneidkantenhügel 3e und die Schneide 4 insgesamt zwei Schneidkantenhügel 4e auf. Bei der in Fig. 3 dargestellten Ausgestaltung weist die Schneide 3 nur einen Schneidkantenhügel 3e und die Schneide 4 insgesamt zwei Schneidkantenhügel 4e auf.

Bei den in den Fig. 2 und 3 dargestellten Ausführungsformen ist die Anordnung nun so getroffen, daß der jeweilige Schneidkantenhügel 3e, 4e im wesentlichen bogenförmig ausgestaltet ist. Grundsätzlich kann es auch vorgesehen sein, daß diese bogenförmige Ausgestaltung nur über einen Abschnitt des Schneidkantenhügels 3e, 4e vorgesehen ist. Vorzugsweise kommen hier Parabelformen oder Kreisbogenformen zum Einsatz.

In besonders bevorzugter Ausgestaltung ist es ferner vorgesehen, daß die Freifläche 3c-6c mindestens eine im wesentlichen konkave Ausformung 3f-6f aufweist, die im folgenden als "Freiflächental" bezeichnet wird. Dabei bildet das Freiflächental 3f-6f zusammen mit der Spanfläche 3b-6b der Schneide 3-6 eine im wesentlichen konkave Ausformung 3g-6g der Schneidkante 3a-6a, die im folgenden als "Schneidkantental" bezeichnet wird. Dabei ist zu berücksichtigen, daß der Begriff "konkave Ausformung" entsprechend weit auszulegen ist wie der oben erläuterte Begriff "konvexe Ausformung".

Bei allen dargestellten Ausführungsformen ist die Anordnung so getroffen, daß das Schneidkantental 3g-6g im wesentlichen bogenförmig ausgestaltet ist. Auch hier ist es besonders vorteilhaft, wenn Parabelformen oder Kreisbogenformen zum Einsatz kommen.

Interessant ist nun die Ausgestaltung des jeweiligen Freiflächenhügels 3d-6d insgesamt, insbesondere in dem der Schneidkante 3a-6a abgewandten Bereich.

Zunächst ist es vorgesehen, daß der Freiflächenhügel 3d-6d von einem der Schneidkante 3a-6a zugewandten, vorderen Bereich der Freifläche 3c-6c zu einem der Schneidkante 3a-6a abgewandten, hinteren Bereich der Freifläche 3c-6c verläuft. Bei allen dargestellten Ausführungsformen ist es vorteilhafterweise so, daß der Freiflächenhügel 3d-6d länglich ausgestaltet ist und entlang einer gebogenen Bahn 8 verläuft. Diese gebogene Bahn 8 ist in Fig. 2d beispielbaft für alle Freiflächenhügel 3d-6d dargestellt. Durch eine solche gebogene Ausgestaltung der Freiflächenhügel 3d-6d läßt sich wie weiter oben erläutert eine besonders gute Bohrwirkung erreichen. Dabei handelt es sich bei der gebogenen Bahn 8 um eine um die Bohrerlängsachse 7 verlaufende, kreisförmige Bahn. Grundsätzlich kann es aber auch vorteilhaft sein, hier eine spiralförmige Bahn o. dgl. vorzusehen.

Entsprechendes gilt für die Freiflächentäler 3f-6f. Diese sind ebenfalls länglich ausgestaltet und verlaufen entlang einer gebogenen Bahn, die wieder als um die Bohrerlängsachse 7 verlaufende kreisförmige Bahn, spiralförmige Bahn o. dgl. ausgestaltet sein kann.

Es ist den Darstellungen gemäß Fig. 2c, 4a und 5a zu entnehmen, daß der Freiflächenhügel 3d-6d vom vorderen Bereich der Freifläche 3c-6c zum hinteren Bereich der Freifläche 3c-6c hin in einem Abflachungsbereich 3h-6h abflacht. Hierfür ist es vorzugsweise so, daß der Freiflächenhügel 3d-6d im Abflachungsbereich 3h-6h eine Schräge o. dgl. aufweist. Um einem Ausbrechen des Schneidkantenhügel 3e-6e vorzubeugen, ist es weiter vorzugsweise vorgesehen, daß der Abflachungbereich 3h-6h, insbesondere die Schräge o. dgl., in einem Abstand von der Schneidkante 3a-6a beginnt.

Der optimalen Auslegung des Abflachungsbereichs 3h-6h kommt für das Bohrverhalten des Gesteinsbohrers besondere Bedeutung zu, wie im folgenden anhand der Ausgestaltung mit Schräg erläutert wird.

Eine besonders flache Ausgestaltung der Schräge 3h-6h führt dazu, daß es zu einem Aufsetzen und damit einem Abstützen des Gesteinsbohrers auf dem abzutragenden Bohrgut kommt. Damit läßt sich die spezifische Zerspanungskraft an dem jeweiligen Schneidkantenhügel 3e-6e (und der an dem jeweiligen Schneidkantenhügel 3e-6e herrschende Anpreßdruck) weitgehend beliebig einstellen. Dabei ist zu berücksichtigen, daß mit dem Aufsetzen gleichzeitig eine Erhöhung der Reibung verbunden ist.

Bei den Ausgestaltungen gemäß den Fig. 4 und 5 ist es vorgesehen, daß sich die Breite des Freiflächenhügels 3d-6d vom hinteren Bereich der Freifläche 3c-6c zum vorderen Bereich der Freifläche 3c-6c hin in einem Verjüngungsbereich verjüngt, wobei sich der Verjüngungsbereich vorzugsweise innerhalb des Abflachungsbereichs 3h-6h befindet oder, wie dargestellt, mit diesem identisch ist.

Bei allen dargestellten und insoweit bevorzugten Ausführungsformen ist zumindest jeweils eine Schneide 3-6 mit mehr als nur einem Freiflächenhügel 3d-6d ausgestattet. Dabei sind zwei Freiflächenhügel 3d-6d jeweils vorzugsweise durch ein oben beschriebenes Freiflächental 3f-6f voneinander getrennt. Weiter vorzugsweise ist es so, daß sich die Breite des Freiflächentals 3f-6f vom vorderen Bereich der Freifläche 3c-6c zum hinteren Bereich der Freifläche 3c-6c hin in einem Verjüngungsbereich verjüngt. Dies ist besonders gut den Darstellungen in den Fig. 4b und 5b zu entnehmen. Auch diese Ausgestaltung hat in Versuchen zu einem besonders guten Bobrverhalten geführt.

Es kann aber auch vorgesehen sein, daß zwei Freiflächenhügel unmittelbar nebeneinander angeordnet sind, also ohne von einem Freiflächental voneinander getrennt zu sein.

Besonders für den Bohrhammerbetrieb ist eine weitere bevorzugte Ausgestaltung vorgesehen, bei der die Freiflächenhügel 3d-6d und die Freiflächentäler 3f-6f an den jeweiligen Schneiden 3-6 so ausgestaltet und angeordnet sind, daß ein Freiflächenhügel 3d-6d einer Schneide 3-6 auf oder in der Nähe der gleichen um die Bohrerlängsachse 7 verlaufenden Kreisbahn liegt wie ein Freiflächental 3f-6f einer anderen Schneide 3-6. Damit wird erreicht, daß der entsprechende Schneidkantenhügel 3e-6e der einen Schneide 3-6 auf oder in der Nähe der gleichen um die Bohrerlängsachse 7 verlaufenden Kreisbahn liegt wie das entsprechende Schneidkantental 3g-6g der anderen Schneide 3-6. Dies ist besonders deutlich der Darstellung gemäß Fig. 2b zu entnehmen.

Die zuletzt beschriebene, gewissermaßen komplementäre Ausgestaltung von Freiflächenhügeln und Freiflächentälern zweier Schneiden läßt sich in einfacher Weise dadurch erreichen, daß zumindest zwei Schneiden 3-6 eine unterschiedliche Anzahl von Freiflächenhügeln 3d-6d und/oder Freiflächentälern 3f-6f aufweisen. Dabei wird vorzugsweise davon ausgegangen, daß die Freiflächentäler 3f-6f und die Freiflächenhügel 3d-6d im wesentlichen gleichmäßig über die jeweilige Schneidkante 3a-6a verteilt sind.

Bei den in den Fig. 2 und 3 dargestellten Ausführungsformen ist die Anordnung so getroffen, daß die jeweilige Schneidkante 3a-6a zumindest einer Schneide 3-6 im wesentlichen wellenförmig verläuft. Vorteilhafterweise kommt hier eine angenäherte sinusförmige Ausgestaltung in Betracht.

Die obige komplementäre Ausgestaltung läßt sich hier dadurch erreichen, daß die wellenförmige Schneidkante 3a-6a einer Schneide 3-6 zu der wellenförmigen Schneidkante 3a-6a der anderen Schneide 3-6 derart versetzt angeordnet ist, daß ein Schneidkantenhügel 3c-6e der einen Schneide 3-6 auf oder in der Nähe der gleichen um die Bohrerlängsachse 7 verlaufenden Kreisbahn liegt wie ein Schneidkantental 3g-6g der anderen Schneide 3-6. Die zueinander komplementären, wellenförmigen Schneidkanten 3a-6a sind damit entsprechend phasenverschoben angeordnet. Bei der komplementären Ausgestaltung der Schneidkanten zweier Schneiden ist zu berücksichtigen, daß ein Schneidkantenhügel nicht exakt auf das korrespondierende Schneidkantental ausgerichtet sein muß. Vielmehr kann eine nur teilweise Ausrichtung vorgesehen sein, was im Hinblick auf die Laufruhe beim Bohrbetrieb vorteilhaft sein kann.

Neben der oben beschriebenen, wellenförmigen Ausgestaltung der Schneidkanten 3a-6a kann es auch vorgesehen sein, daß die jeweilige Schneidkante aus halbkreisförmigen Abschnitten besteht, die nebeneinander angeordnet sind. Dabei ist es vorzugsweise vorgesehen, daß sich diese halbkreisförmigen Abschnitte unmittelbar aneinander anschließen.

Hinsichtlich der Anzahl und Anordnung der Schneiden 3-6 sind unterschiedliche Varianten denkbar. Bei den in den Fig. 2 und 3 dargestellten Ausführungsformen sind zwei Schneiden 3, 4 vorgesehen, die hinsichtlich der Bohrerlängsachse 7 um 180° versetzt angeordnet sind.

Gemäß der in Fig. 4 dargestellten und insoweit bevorzugten Ausführungsform ist es weiter denkbar, daß drei Schneiden 3, 4, 5 vorgesehen sind, die hinsichtlich der Bohrerlängsachse 7 um etwa 120° versetzt angeordnet sind. Eine solche Ausführungsform läßt sich ferner in eine Variante mit insgesamt sechs Schneiden überführen, indem in Verlängerung der vorhandenen drei Schneiden drei zusätzliche Schneiden angefügt werden. Die drei zusätzlichen Schneiden sind vorzugsweise gegenüber den anderen drei Schneiden nach hinten - entgegen der Bohrvorschubrichtung - versetzt angeordnet.

Bei der weiter bevorzugten Ausgestaltung gemäß der Darstellung in Fig. 5 sind vier Schneiden 3-6 vorgesehen, wobei die Schneiden 3, 4 und die Schneiden 5, 6 paarweise um 180° versetzt angeordnet sind. Dabei bildet das eine Schneidenpaar 3, 4 eine Hauptschneide und das andere Schneidenpaar 5, 6 eine Nebenschneide. Hauptschneide 3, 4 und Nebenschneide 5, 6 schließen hier einen Winkel ein, der in einem Bereich zwischen etwa 30° und etwa 75°, vorzugsweise zwischen etwa 45° und etwa 75° und insbesondere bei etwa 30°, etwa 45° oder etwa 60° liegt.

Es ist besonders vorteilhaft, wenn die Nebenschneide 5, 6 gegenüber der Hauptschneide axial nach hinten, also entgegen der Bohrvorschubrichtung, versetzt angeordnet ist. Dies läßt sich der Darstellung in Fig. 5 a entnehmen.

Der axiale Versatz der Nebenschneide 5, 6 zeigt in Verbindung mit einer ganz bestimmten Frontwinkelgeometrie von Hauptschneide 3, 4 und Nebenschneide 5, 6 besondere Vorteile. Hierfür ist es zunächst vorgesehen, daß der Frontwinkel der Hauptschneide 3, 4 kleiner ist als der Frontwinkel der Nebenschneide 5, 6. Versuche haben gezeigt, daß der Frontwinkel der Hauptschneide 3, 4 in einem Bereich zwischen etwa 120° und etwa 140°, vorzugsweise bei etwa 130° liegen sollte. Der Frontwinkel der Nebenschneide 5, 6 liegt dagegen vorzugsweise in einem Bereich zwischen etwa 140° und etwa 160°, vorzugsweise bei etwa 150°.

Der axiale Versatz der Nebenschneide 5, 6 einerseits und die unterschiedlichen Frontwinhel zwischen Hauptschneide 3, 4 und Nebenschneide 3, 4 führen zuwächst dazu, daß die Nebenschneide 5, 6 die Zentrier- und Anbohrwirkung der Hauptschneide 3, 4 unterstützt. Zusätzlich wirkt sie durch den größeren Frontwinkel auch unterstützend im äußeren Bereich des Gesteinsbohrers.

Eine weitere Unterstützung der Zentrier- und Anbohrwirkung geht auf die Freiflächentäler 3f-6f bzw. auf die Schneidkantentäler 3g-7g zurück, die der Bohrerspitze entlang der jeweiligen Schneidkante 3a-6a gesehen jeweils am nächsten liegen.

Der Darstellung in Fig. 5b läßt sich noch ein Merkmal entnehmen, das eine zusätzliche Verbesserung des Bohrverhaltens mit sich bringt. Dieses Merkmal besteht darin, daß die Erstreckung der Nebenschneide 5, 6 in radialer Richtung um einen Differenzwert X geringer ist als die Erstreckung der Hauptschneide 3, 4 in radialer Richtung. Damit wird u. a. erreicht, daß die Reibung der Nebenschneide 5, 6 am Rande des Bohrlochs erheblich reduziert wird. Dies hängt natürlich von dem zu bohrenden Werkstoff ab. In besonders bevorzugter Ausgestaltung ist der Differenzwert X als eine Funktion der Erstreckung der Hauptschneide 3, 4 in radialer Richtung festgelegt. Versuche haben gezeigt, daß die Verwendung einer linearen Funktion bereits zu guten Ergebnissen für alle erforderlichen Bohrergrößen führt. Alternativ oder zusätzlich kann der Differenzwert in Abhängigkeit von dem zu bohrenden Werkstoff gewählt werden.

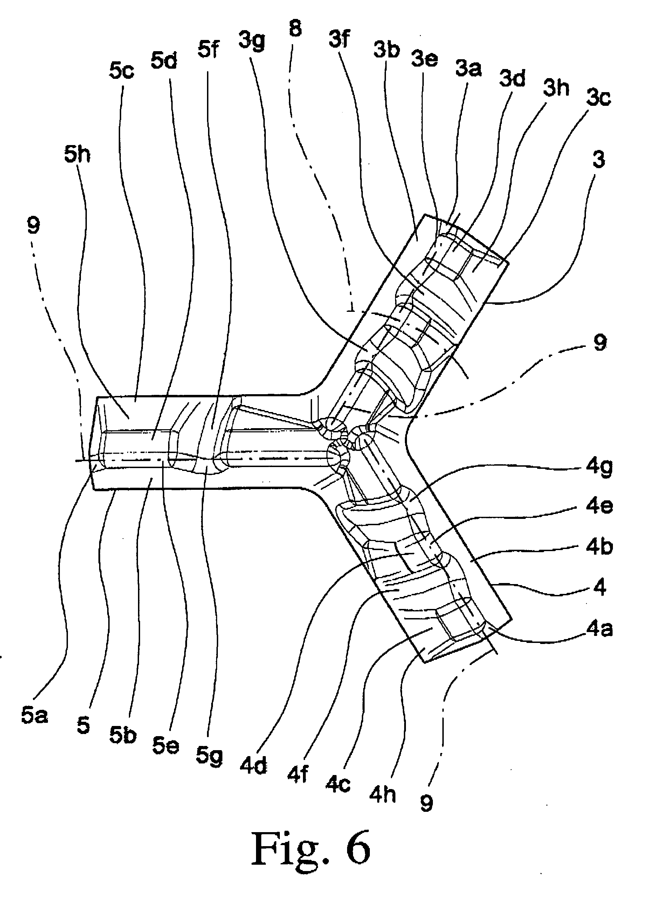

Fig. 6 zeigt eine Ausgestaltung eines Gesteinsbohrers mit drei Schneiden 3-5, der von seinem grundsätzlichen Aufbau her dem in den Fig. 4a, 4b dargestellten Gesteinsbohrer entspricht. Interessant ist hier die Tatsache, daß von oben gesehen die Schneidkanten 3a-6a der Schneiden 3-6 von innen nach außen jeweils zumindest überwiegend entlang einer geraden Linie 9 verlaufen. Dies führt dazu, daß auch die Schneiden 3-6 insgesamt entsprechend gerade ausgestaltet werden können. Dies wiederum führt zu einer besonders leichten Fertigbarkeit des Gesteinsbohrers, insbesondere, wenn der Bohrkopf 2 in eine zugeordnete Nut im Schaft 1 einsetzbar sein soll. Die Bereitstellung einer geraden Nut ist ja leicht zu realisieren. Die gerade Ausgestaltung der Schneiden 3-6 läßt sich auf alle hier dargestellten Ausfübsungsformen eines Gesteinsbohrers vorteilhaft anwenden.

Vorschlagsgemäß ist es aber so, dass die Schneidkanten 3a-6a und damit die Schneiden 3-6 so ausgestaltet sind, daß sie entlang eines Bogens 9 verlaufen. Dies wird weiter unten erläutert.

Der optimalen Auslegung der Schneidkantenhügel 3c-6e und der Schneidkantentäler 3g-6g kommt für den erzielbaren Bohrfortschritt pro Zeiteinheit vorliegend besondere Bedeutung zu. Ein wesentlicher Aspekt besteht hier in der Erstreckung der Schneidkantentäler 3g-6g entlang der jeweiligen Schneidkante 3a-6a, da durch die Schneidkantentäler 3g-6g die Kontaktlinie zwischen der Schneidkante 3a-6a und dem Bohrgut unterbrochen ist.

Besonders gute Ergebnisse haben sich in Versuchen dann gezeigt, wenn sich das Schneidkantental 3g-6g bzw. die Schneidkantentäler 3g-6g einer Schneidkante 3a-6a insgesamt über weniger als 50% der Länge der jeweiligen Schneidkante 3a-6a erstreckt bzw. erstrecken.

Dabei ist es weiter vorzugsweise so, daß sich ein einzelnes Schneidkantental 3g-6g einer Schneidkante 3a-6a über weniger als 25% der Länge der jeweiligen Schneidkante 3a-6a erstreckt. Mit diesen Vorgaben läßt sich ein hoher Bohrfortschritt pro Zeiteinheit bei besonders geringem Verschleiß erzielen.

Ein besonders ruhiger Lauf des Gesteinsbohrers läßt sich dadurch erreichen, daß die Tiefe der Schneidkantenhügel 3e-6e und/oder der Schneidkantentäler 3g-6g einer Schneidkante 3a-6a, vorzugsweise aller Schneidkanten 3a-6a, identisch ist. In besonders bevorzugter Ausgestaltung trifft diese Identität auf die Formgebung der Schneidkantenhügel 3e-6e und/oder der Schneidkantentäler 3g-6g insgesamt zu.

Es kann aber auch vorteilhaft sein, daß die Formgebungen der Schneidkantenhügel 3e-6e und/oder der Schneidkantentäler 3g-6g einer Schneidkante 3a-6a zueinander unterschiedlich sind. Damit kann der Tatsache Rechnung getragen werden, daß bei einer Umdrehung des Gesteinsbohrers ein innenliegender Schneidpunkt der jeweiligen Schneidkante 3a-6a eine kürzere Strecke zurücklegt als ein außenliegender Schneidpunkt der jeweiligen Schneidkante 3a-6a, wobei der dem außenliegenden Schneidpunkt zuzurechnende spezifische Verschleiß entsprechend höher als der dem innenliegende Schneidpunkt zuzurechnende spezifische Verschleiß ausfällt. Vor diesem Hintergrund ist es in einer weiteren bevorzugten Ausführungsform vorgesehen, daß die radial außenliegenden Schneidkantenhügel 3e-6e stärker, insbesondere entlang der jeweiligen Schneidkante 3a-6a gesehen breiter als die radial innenliegenden Schneidkantenhügel 3e-6e dimensioniert sind, um dem zu erwartenden Abtrag bzw. Verschleiß gerecht zu werden.

Nach der vorschlagsgemäßen Lehre wird der besondere Verlauf der Schneidkanten 3a-6a beansprucht, der in den Zeichnungen 4b und 5b gezeigt ist. Hier es so, daß von oben gesehen die Schneidkanten 3a-6a der Schneiden 3-6 von innen nach außen entlang eines Bogens 9 mit einer Krümmungsrichtung verlaufen, die der Drehrichtung des Gesteinsbohrers entgegengesetzt ist. In Fig. 4b beispielsweise verlaufen die Schneidkanten 3a, 4a und 5a von innen (Bohrerlängsachse 7) nach außen entlang eines Bogens 9 mit einer Krümmungsrichtung rechtsherum, während die Drehrichtung des Gesteinbohrers linksherum vorgesehen ist. Der damit verbundene Effekt beim Bohrbetrieb wurde im allgemeinen Teil der Beschreibung erläutert.

Der Verlauf der Schneidkanten 3a-6a entlang eines Bogens 9 in obigem Sinne schließt nicht aus, daß die Schneidkanten 3a-6a abschnittsweise gerade ausgestaltet sind, wobei die geraden Abschnitte dann vorzugsweise tangential zu dem Bogen 9 ausgerichtet sind. Vorzugsweise ist es aber so, daß die Schneidkanten 3a-6a selbst entsprechend gebogen ausgestaltet sind.

Bei der in Fig. 5b dargestellten und insoweit bevorzugten Ausführungsform sind wie erläutert insgesamt vier Schneiden 3-6 vorgesehen, die paarweise um 180° versetzt angeordnet sind. Die Schneidkanten 3a, 4a der beiden die Hauptschneide bildenden Schneiden 3, 4 verlaufen von oben gesehen entlang einer im wesentlichen S-förmigen Linie. Bei dieser bevorzugten Variante liegt der Wendepunkt der im wesentlichen S-förmigen Linie von oben gesehen im Bereich der Bohrerlängsachse 7. Diese bewirkt eine besonders geringe Reibung im Bereich der Bohrerlängsachse 7, was wieder vorteilhaft für den Bohrbetrieb ist.

Hier und vorzugsweise ist es so, daß die Schneidkanten 3a, 4a im Bereich der Bohrerlängsachse 7 nicht unterbrochen sind. Anders sieht es bei den Schneidkanten 5a, 6a der aus den Schneiden 5, 6 bestehenden Nebenschneide aus, die axial wie beschrieben nach hinten versetzt ist. Hier ist eine entsprechende Unterbrechung der Schneidkanten 5a, 6a im Bereich der Bohrerlängsachse 7 zu erkennen.

Bei einer weiter bevorzugten, hier nicht dargestellten Ausgestaltung sind insgesamt drei Schneiden vorgesehen, wobei zwei Schneiden wie oben beschrieben zueinander um 180° versetzt angeordnet sind. Die Schneidkanten dieser beiden Schneiden verlaufen entlang einer im wesentlichen S-förmigen Linie. Die dritte Schneide ist hinsichtlich der Bohrerlängsachse zu einer der anderen Schneiden um weniger als 75° versetzt angeordnet und ist ferner axial nach hinten - entgegen der Bohrvorschubrichtung - versetzt angeordnet.

Es darf noch darauf hingewiesen werden, daß für die Ausgestaltung der Bohrerspitze zahlreiche Varianten denkbar sind. In besonders bevorzugter Ausgestaltung ist die Bohrerspitze gemäß der DE 20 2006 003 539 U1 ausgestaltet, die auf die Anmelderin zurückgeht und die in vollem Umfange zum Gegenstand der vorliegenden Anmeldung gemacht wird.

Ferner kann es vorteilhaft sein, eine Anordnung mit quer zu den Schneidkanten verlaufender Querschneide derart weiterzubilden, daß anstelle der Querschneide nur zwei diagonal verlaufende Kanten verbleiben. Dies kann die Zentrierwirkung spürbar erhöhen.

Für alle erläuterten Ausführungsformen ist die Verbindungstechnik zwischen dem Bohrkopf 2 einerseits und dem Schaft 1, andererseits von besonderer Bedeutung. Es wurde bereits darauf hingewiesen, daß der Bohrkopf 2 mit einer Schneidplatte ausgestattet sein kann, die in eine Nut im Schaft 1 einsetzbar ist. Dies ist in den Fig. 2 und 3 dargestellt.

Auch der in Fig. 4 dargestellte Bohrkopf 2 kann grundsätzlich in eine Nut im Schaft 1 eingesetzt werden. Dies führt durch die gebogene Ausgestaltung der Schneiden 3 - 5 zu einem gewissen fertigungstechnischen Aufwand, der aber noch in Kauf genommen werden kann. Leichter ist die Fertigbarkeit selbstredend bei der in Fig. 6 dargestellten Ausführungsform.

Bei der in Fig. 5 dargestellten Ausführungsform handelt es sich um einen einstückigen Bohrkopf 2, der ebenfalls in irgendeiner Weise mit dem Schaft 1 verbunden werden muß. Dabei kann es vorgesehen sein, daß sowohl der Bohrkopf 2 als auch der Schaft 1 jeweils eine plane Verbindungsfläche aufweist. Denkbar ist aber auch eine formschlüssige Verbindung, bei der beispielsweise ein am Bohrkopf 2 vorgeschener Steg in eine am Schaft 1 vorgesehene Nut eingreift.

Schließlich darf noch darauf hingewiesen werden, daß es vorteilhaft sein kann, daß der Bohrkopf 2 radial geringfügig über den Schaft 1 übersteht. Dies läßt sich grundsätzlich auf alle erläuterten Ausführungsformen anwenden.

## Patentansprüche

1. Gesteinsbohrer mit einem Bohrkopf (2), wobei am Bohrkopf (2) zumindest drei Schneiden (3-6) angeordnet sind, wobei die Schneiden (3-6) von oben gesehen bezogen auf die Bohrerlängsachse (7) im wesentlichen radial ausgerichtet sind, wobei die Schneiden (3-6) jeweils eine Schneidkante (3a-6a) aufweisen, die durch eine vorlaufend angeordnete Spanfläche (3b-6b) und eine nachlaufend angeordnete Freifläche (3c-6c) gebildet ist,
**dadurch gekennzeichnet,**
**dass** von oben gesehen die Schneidkanten (3a-6a) der Schneiden (3-6) von innen nach außen entlang eines Bogens (9) mit einer Krümmungsrichtung verlaufen, die der Drehrichtung des Gesteinsbohrers entgegengesetzt ist, dass die Freifläche (3c-6c) mindestens eine im wesentlichen konkave Ausformung (3f-6f) - Freiflächental - aufweist, das zusammen mit der Spanfläche (3b-6b) eine im wesentlichen konkave Ausformung (3g-6g) der Schneidkante (3a-6a) - Schneidkantental - bildet und daß das Freiflächental (3f-6f) länglich ausgestaltet ist und entlang einer gebogenen Bahn verläuft.

2. Gesteinsbohrer nach Anspruch 1, **dadurch gekennzeichnet, daß** mindestens zwei, vorzugsweise genau zwei, Schneiden (3, 4) vorgesehen sind, die hinsichtlich der Bohrerlängsachse (7) um 180° versetzt angeordnet sind und daß von oben gesehen die Schneidkanten (3a, 4a) der beiden Schneiden (3, 4) entlang einer im wesentlichen S-förmigen Linie verlaufen, vorzugsweise, daß der Wendepunkt der im wesentlichen S-förmigen Linie von oben gesehen im Bereich der Bohrerlängsachse (7) liegt.

3. Gesteinsbohrer nach Anspruch 1 oder 2, **dadurch gekennzeichnet, dass** an mindestens einer Schneide (3-6) die Freifläche (3c-6c) mindestens eine im wesentlichen konvexe Ausformung (3d-6d) - Freiflächenbügel - aufweist, die zusammen mit der Spanfläche (3b-6b) eine im wesentlichen konvexe Ausformung (3e-6e) in der Schneidkante (3a-6a) - Schneidkantenhügel - bildet.

4. Gesteinsbohrer nach einem der vorhergehenden Ansprüche, **dadurch gekennzeichnet, daß** die Anordnung so getroffen ist, daß der Schneidkantenhügel (3e, 4e) zumindest abschnittsweise im wesentlichen bogenförmig, insbesondere parabelförmig, kreisbogenförmig o. dgl., ausgestaltet ist, und/oder, daß die Anordnung so getroffen ist, daß das Schneidkantental (3g, 4g) im wesentlichen bogenförmig, insbesondere parabelförmig, kreisbogenförmig . dgl., ausgestaltet ist.

5. Gesteinsbohrer nach einem der vorhergehende Ansprüche, **dadurch gekennzeichnet, daß** der Freiflächenhügel (3d-6d) von einem der Schneidkante (3a-6a) zugewandten, vorderen Bereich der Freifläche (3c-6c) zu einem der Schneidkante (3a-6a) abgewandten, hinteren Bereich der Freifläche (3c-6c) verläuft.

6. Gesteinsbohrer nach einem der vorhergehenden Ansprüche, **dadurch gekennzeichnet, daß** der Freiflächenhügel (3d-6d) vorzugsweise länglich ausgestaltet ist und entlang einer gebogenen Bahn (8), vorzugsweise entlang einer um die Bohrerlängsachse (7) verlaufenden kreisförmigen Bahn, spiralförmigen Bahn o. dgl., verläuft, und/oder, daß das Freiflächental (3f-6f) entlang einer um die Bohrerlängsachse (7) verlaufenden kreisförmigen Bahn, spiralförmigen Bahn o. dgl., verläuft.

7. Gesteinsbohrer nach Anspruch 5 und ggf, nach Anspruch 6, **dadurch gekennzeichnet, daß** der Freiflächenhügel (3d-6d) vom vorderen Bereich der Freifläche (3c-6c) zum hinteren Bereich der Freifläche (3c-6c) hin in einem Abflachungsbereich (3h-6h) abflacht, vorzugsweise, daß der Freiflächenhügel (3d-6d) im Abflachungsbereich (3h-6h) eine Schräge o. dgl. aufweist, weiter vorzugsweise, daß der Abflachungsbereich (3h-6h), insbesondere die Schräge o. dgl., in einem Abstand von der Schneidkante (3a-6a) beginnt.

8. Gesteinsbohrer nach Anspruch 5 und ggf. nach Anspruch 6 oder 7, **dadurch gekennzeichnet, daß** sich die Breite des Freiflächenhügels (3d-6d) vom hinteren Bereich der Freifläche (3c-6c) zum vorderen Bereich der Freifläche (3c-6c) hin in einem Verjüngungsbereich verjüngt, vorzugsweise, daß sich der Verjüngungsbereich innerhalb des Abflachungsbereichs (3h-6h) befindet oder mit diesem identisch ist.

9. Gesteinsbohrer nach einem der Ansprüche 6 bis 8, **dadurch gekennzeichnet, daß** sich die Breite des Freiflächentals (3f-6f) vom vorderen Bereich der Freifläche (3c-6c) zum hinteren Bereich der Freifläche (3c-6c) hin in einem Verjüngungsbereich verjüngt.

10. Gesteinsbohrer nach einem der vorhergehenden Ansprüche, **dadurch gekennzeichnet, daß** die Freiflächenhügel (3d-6d) und die Freiflächentäler (3f-6f) an den jeweiligen Schneiden (3-6) so ausgestaltet und angeordnet sind, daß ein Freiflächenhügel (3d-6d) einer Schneide (3-6) auf oder in der Nähe der gleichen um die Bohrerlängsachse (7) verlaufenden Kreisbahn liegt wie ein Freiflächental (3f-6f) einer anderen Schneide (3-6) und daß damit der entsprechende Schneidkantenhügel (3e-6e) der einen Schneide (3, 6) auf oder in der Nähe der gleichen um die Bohrerlängsachse (7) verlaufenden Kreisbahn liegt wie das entsprechende Schneidkantental (3g-6g) der anderen Schneide (3-6).

11. Gesteinsbohrer nach einem der vorhergehenden Ansprüche, **dadurch gekennzeichnet, daß** die Anordnung so getroffen ist, daß die Schneidkante (3a-6a) zumindest einer Schneide (3-6) im wesentlichen wellenförmig, vorzugsweise im wesentlichen sinusförmig, verläuft, vorzugsweise, daß die wellenförmige Schneidkante (3a-6a) einer Schneide (3-6) zu der wellenförmigen Schneidkante (3a-6a) einer anderen Schneide (3-6) derart versetzt angeordnet ist, daß ein Schneidkantenhügel (3e-6e) der einen Schneide (3-6) auf oder in der Nähe der gleichen um die Bohrerlängsachse (7) verlaufenden Kreisbahn liegt wie ein Schneidkantental (3g-6g) der anderen Schneide (3-6).

12. Gesteinsbohrer nach einem der vorhergehenden Ansprüche, **dadurch gekennzeichnet, daß** zwei Schneiden (3, 4) vorgesehen sind, die hinsichtlich der Bohrerlängsachse (7) um 180° versetzt angeordnet sind, oder, daß drei Schneiden (3, 4, 5) vorgesehen sind, die hinsichtlich der Bohrerlängsachse (7) um etwa 120° versetzt angeordnet sind, oder, daß vier Schneiden (3-6) vorgesehen sind, wobei die Schneiden (3-6) paarweise um 180° versetzt angeordnet sind, wobei das eine Schneidenpaar (3, 4) eine Hauptschneide bildet und wobei das andere Schneidenpaar (5, 6) eine Nebenschneide bildet, vorzugsweise, daß die Hauptschneide (3, 4) und die Nebenschneide (5, 6) einen Winkel einschließen, der in einem Bereich zwischen etwa 45° und etwa 75°, vorzugsweise bei etwa 60°, liegt.

13. Gesteinsbohrer nach Anspruch 12, **dadurch gekennzeichnet, daß** die Nebenschneide (5, 6) gegenüber der Hauptschneide (3, 4) axial nach hinten - entgegen der Bohrverschubrichtung - versetzt angeordnet ist.

## Claims

1. Rock drill comprising a drill head (2), wherein at least three lips (3-6) are arranged on the drill head (2), wherein the lips (3-6), as viewed from above, are oriented substantially radically with respect to the drill longitudinal axis (7), wherein the lips (3-6) have a respective cutting edge (3a-6a) which is formed by a leading rake face (3b-6b) and a trailing flank (3c-6c),
**characterized in that**, as viewed from above, the cutting edges (3a-6a) of the lips (3-6) run from inside to outside along a curve (9) having a direction of curvature which is opposed to the direction of rotation of the rock drill, **in that** the flank (3c-6c) has at least one substantially concave shape (3f-6f) - the flank valley - which together with the rake face (3b-6b) forms a substantially concave shape (3g-6g) of the cutting edge (3a-6a) - the cutting edge valley - and **in that** the flank valley (3f-6f) is of elongated configuration and runs along a curved path.

2. Rock drill according to Claim 1, **characterized in that** at least two, preferably exactly two, lips (3, 4) a.re provided which are arranged offset by 180° with respect to the drill longitudinal axis (7), and **in that**, as viewed from above, the cutting edges (3a, 4a) of the two lips (3, 4) run along a substantially S-shaped line, preferably **in that** the inflection point of the substantially S-shaped line, as viewed from above, lies in the region of the drill longitudinal axis (7).

3. Rock drill according to Claim 1 or 2, **characterized in that**, on at least one lip (3-6), the flank (3c-6c) has at least one substantially concave shape (3d-6d) - the flank mound - which together with the rake face (3b-6b) forms a substantially convex shape (3e-6e) in the cutting edge (3a-6a) - the cutting edge mound.

4. Rock drill according to one of the preceding claims, **characterized in that** the arrangement is made in such a way that the cutting edge mound (3e, 4e) is formed, at least in sections, substantially in a curved shape, in particular parabolic shape, circular are shape or the like, and/or **in that** the arrangement is made in such a way that the cutting edge valley (3g, 4g) is formed substantially in a curved shape, in particular parabolic shape, circular arc shape or the like.

5. Rock drill according to one of the preceding claims, **characterized in that** the flank mound (3d-6d) runs from a front region of the flank (3c-6c) facing the cutting edge (3a-6a) to a rear region of the flank (3c-6c) facing away from the cutting edge (3a-6a).

6. Rock drill according to one of the preceding claims, **characterized in that** the flank mound (3d-6d) is of preferably elongated configuration and runs along a curved path (8), preferably along a circular path running about the drill longitudinal axis (7), spiral path or the like, and/or **in that** the flank valley (3f-6f) runs along a circular path running about the drill longitudinal axis (7), spiral path or the like.

7. Rock drill according to Claim 5 and optionally according to Claim 6, **characterized in that** the flank mound (3d-6d) is flattened from the front region of the flank (3c-6c) towards the rear region of the flank (3c-6c) in a flattening region (3h-6h), preferably **in that** the flank mound (3d-6d) has a slope in the flattening region (3h-6h), and furthermore preferably **in that** the flattening region (3h-6h), in particular the slope or the like, starts at a distance from the cutting edge (3a-6a).

8. Rock drill according to Claim 5 and optionally according to Claim 6 or 7, **characterized in that** the width of the flank mound (3d-6d) narrows from the rear region of the flank (3c-6c) towards the front region of the flank (3c-6c) in a narrowing region, preferably **in that** the narrowing region is located within the flattening region (3h-6h) or is identical thereto.

9. Rock drill according to one of Claims 6 to 8, **characterized in that** the width of the flank valley (3f-6f) narrows from the front region of the flank (3c-6c) towards the rear region of the flank (3c-6c) in a narrowing region.

10. Rock drill according to one of the preceding claims, **characterized in that** the flank mounds (3d-6d) and the flank valleys (3f-6f) are formed and arranged on the respective lips (3-6) in such a way that a flank mound (3d-6d) of one lip (3-6) lies on or in the vicinity of the same circular path running about the drill longitudinal axis (7) as the flank valley (3f-6f) of another lip (3-6) and **in that** the corresponding cutting edge mound (3e-6e) of the one lip (3-6) thus lies on or in the vicinity of the same circular path running about the drill longitudinal axis (7) as the corresponding cutting edge valley (3g-6g) of the other lip (3-6).

11. Rock drill according to one of the preceding claims, **characterised in that** the arrangement is made in such a way that the cutting edge (3a-6a) of at least one lip (3-6) runs substantially in a wave shape, preferably substantially in a sinusoidal shape, preferably **in that** the wave-shaped cutting edge (3a-6a) of one lip (3-6) is arranged offset from the wave-shaped cutting edge (3a-6a) of another lip (3-6) in such a way that a cutting edge mound (3e-6e) of the one lip (3-6) lies on or in the vicinity of the same circular path running about the drill longitudinal axis (7) as a cutting edge valley (3g-6g) of the other lip (3-6).

12. Rock drill according to one of the preceding claims, **characterized in that** two lips (3, 4) are provided which are arranged offset by 180° with respect to the drill longitudinal axis (7), or **in that** three lips (3, 4, 5) are provided which are arranged offset by about 120° with respect to the drill longitudinal axis (7), or **in that** four lips (3-6) are provided, wherein the lips (3-6) are arranged offset in pairs by 180°, wherein the one lip pair (3, 4) forms a main lip and wherein the other lip pair (5, 6) forms a secondary lip, preferably **in that** the main lip (3, 4) and the secondary lip (5, 6) enclose an angle which is within a range of between about 45° and 75°, preferably around about 60°.

13. Rock drill according to Claim 12, **characterized in that** the secondary lip (5, 6) is arranged offset axially rearwards - against the drilling feed direction - relative to the main lip (3, 4).

## Revendications

1. Foret pour le forage de roches avec une tête de forage (2), dans lequel au moins trois tranchants (3-6) sont disposés sur la tête de forage (2), dans lequel les tranchants (3-6) vus du dessus sont orientés essentiellement en direction radiale par rapport à l'axe longitudinal du foret (7), dans lequel les tranchants (3-6) présentent respectivement une arête vive (3a-6a), qui est formée par une face de coupe (3b-6b) disposée en avant et une face libre (3c-6c) disposée en carrière, **caractérisé en ce que**, vues du dessus, les arêtes vives (3a-6a) des tranchants (3-6) s'étendent de l'intérieur vers l'extérieur suivant un arc (9) avec une direction de courbure qui est opposée au sens de rotation du foret pour le forage de roches, **en ce que** la face libre (3c-6c) présente au moins un creux essentiellement concave (3f-6f) - une vallée de face libre - qui forme avec la face de coupe (3b-6b) un creux essentiellement conclave (3g-6g) de l'arête vive (3a-6a) - une vallée d'arête vive - et **en ce que** la vallée de face libre (3f-6f) est de forme allongée et s'étend suivant une trajectoire courbe.

2. Foret pour le forage de roches selon la revendication 1, **caractérisé en ce qu'**il est prévu au moins deux, de préférence exactement deux, tranchants (3, 4), qui sont disposés en position décalée de 180° par rapport à l'axe longitudinal du foret (7) et **en ce que**, vues du dessus, les arêtes vives (3a, 4a) des deux tranchants (3, 4) s'étendent suivant une ligne essentiellement en forme de S, de préférence **en ce que** le point d'inflexion de la ligne essentiellement en forme de S, vu du dessus, se situe dans la région de l'axe longitudinal du foret (7).

3. Foret pour le forage de roches selon la revendication 1 ou 2, **caractérisé en ce que** la face libre (3c-6c) présente sur au moins un tranchant (3-6) au moins un renflement essentiellement convexe (3d-6d) - une colline de face libre - qui forme avec la face de coupe (3b-6b) un renflement essentiellement convexe (3e-6e) - une colline d'arête vive - dans l'arête vive (3a-6a).

4. Foret pour le forage de roches selon l'une quelconque des revendications précédentes, **caractérisé en ce que** l'agencement est réalisé de telle manière que la colline d'arête vive (3e, 4e) soit au moins localement de forme essentiellement courbe, en particulier parabolique, en arc de cercle ou analogue, et/ou **en ce que** l'agencement est réalisé de telle manière que la vallée d'arête vive (3g, 4g) soit de forme essentiellement courbe, en particulier parabolique, en arc de cercle ou analogue.

5. Foret pour le forage de roches selon l'une quelconque des revendications précédentes, **caractérisé en ce que** la colline de face libre (3d-6d) s'étend d'une région avant de la face libre (3c-6c) tournée vers l'arête vive (3a-6a) jusqu'à une région arrière de la face libre (3c-6c) située à l'opposé de l'arête vive (3a-6a).

6. Foret pour le forage de roches selon l'une quelconque des revendications précédentes, **caractérisé en ce que** la colline de face libre (3d-6d) est de préférence de forme allongée et s'étend suivent une trajectoire courbe (8), de préférence suivant une trajectoire circulaire, une trajectoire spirale ou analogue s'étendant autour de l'axe longitudinal du foret (7), et/ou **en ce que** la vallée de face libre (3f-6f) s'étend suivant une trajectoire circulaire, une trajectoire spirale ou analogue s'étendant autour de l'axe longitudinal du foret (7).

7. Foret pour le forage de roches selon la revendication 5 et éventuellement selon la revendication 6, **caractérisé en ce que** la colline de face libre (3d-6d) s'aplatit de la région avant de la face libre (3c-6c) vers la région arrière de la face libre (3c-6c) dans une région d'aplatissement (3h-6h), de préférence **en ce que** la colline de face libre (3d-6d) présente dans la région d'aplatissement (3h-6h) un biseau ou analogue, et de préférence encore **en ce que** la région d'aplatissement (3h-6h), en particulier le biseau ou analogue, commence à distance de l'arête vive (3a-6a).

8. Foret pour le forage de roches selon la revendication 5 et éventuellement selon la revendication 6 ou 7, **caractérisé en ce que** la largeur de la colline de face libre (3d-6d) se réduit de la région arrière de la face libre (3c-6c) vers la région avant de la face libre (3c-6c) dans une région de rétrécissement, de préférence **en ce que** la région de rétrécissement se trouve à l'intérieur de la région d'aplatissement (3h-6h) ou est identique à celle-ci.

9. Foret pour le forage de roches selon l'une quelconque des revendications 6 à 8, **caractérisé en ce que** la largeur de la vallée de face libre (3f-6f) se réduit de la région avant de la face libre (3c-6c) vers la région arrière de la face libre (3c-6c) dans une région de rétrécissement.

10. Foret pour le forage de roches selon l'une quelconque des revendications précédentes, **caractérisé en ce que** les collines de face libre (3d-6d) et les vallées de face libre (3f-6f) sur les tranchants respectifs (3-6) sont configurées et disposées de telle maniére qu'une colline de face libre (3d-6d) d'un tranchant (3-6) se trouve sur ou à proximité de la même trajectoire circulaire s'étendant autour de l'axe longitudinal du foret (7) qu'une vallée de face libre (3f-6f) d'un autre tranchant (3-6) et **en ce que** la colline d'arête vive correspondante (3e-6e) d'un premier tranchant (3, 6) se trouve sur ou à proximité de la même trajectoire circulaire s'étendant autour de l'axe longitudinal du foret (7) que la vallée d'arête vive correspondante (3g-6g) de l'autre tranchant (3-6).

11. Foret pour le forage de roches selon l'une quelconque des revendications précédentes, **caractérisé en ce que** l'agencement est réalisé de telle manière que l'arête vive (3a-6a) d'au moins un tranchant (3-6) s'étende sous forme essentiellement ondulée, de préférence essentiellement sinusoïdale, de référence que l'arête vive de forme ondulée (3a-6a) d'un tranchant (3-6) soit disposée en position décalée par rapport à l'arête vive de forme ondulée (3a-6a) d'un autre tranchant (3-6), de telle manière qu'une colline d'arête vive (3e-6e) d'un premier tranchant (3-6) se trouve sur ou à proximité de la même trajectoire circulaire s'étendant autour de l'axe longitudinal du foret (7) qu'une vallée d'arête vive (3g-6g) de l'autre tranchant (3-6).

12. Foret pour le forage de roches selon l'une quelconque des revendications précédentes, **caractérisé en ce qu'**il est prévu deux tranchants (3, 4), qui sont disposés en position décalée de 180° par rapport à l'axe longitudinal du foret (7), **en ce qu'**il est prévu trois tranchants (3, 4, 5), qui sont disposés en position décalée d'environ 120° par rapport à l'axe longitudinal du foret (7), ou **en ce qu'**il est prévu quatre tranchants (3-6), dans lequel les tranchants (3-6) sont disposés par paires en position décalée de 180°, dans lequel une première paire de tranchants (3, 4) forme un tranchant principal et dans lequel l'autre paire de tranchants (5, 6) forme une tranchant secondaire, de préférence **en ce que** le tranchant principal (3, 4) et le tranchant secondaire (5, 6) forment un angle qui se situe dans une plage d'environ 45° à 75°, et qui vaut de préférence environ 60°.

13. Foret pour le forage de roches selon la revendication 12, **caractérisé en ce que** le tranchant secondaire (5, 6) est disposé en position décalée axialement vers l'arrière - en apposition au sens de progression du foret - par rapport au tranchant principal (3, 4).
